# EUROPEAN PATENT SPECIFICATION

(11) **EP 3 063 038 B1**
(45) Date of publication and mention of the grant of the patent: **30.12.2020**
(21) Application number: 14790089.8
(22) Date of filing: 28.10.2014
(51) Int. Cl.: B60N 3/00, B60R 11/00, B60N 3/10, B60R 11/02

(54) **DEPLOYABLE TABLE APPARATUS**
AUFKLAPPBARE TISCHVORRICHTUNG
APPAREIL DE TABLE DEPLOYABLE

(30) Priority: 28.10.2013 GB 201319017
(43) Date of publication of application: 07.09.2016
(73) Proprietor: Jaguar Land Rover Limited, Coventry, Warwickshire CV3 4LF (GB)
(72) Inventor: BARNES, Ian, Coventry Warwickshire CV3 4LF (GB)
(74) Representative: Holmes, Matthew William
(86) International application number: PCT/EP2014/073119
(87) International publication number: WO 2015/063084

(56) References cited:
- EP-A2- 1 160 125
- WO-A2-2008/046040
- DE-A1- 10 031 700
- DE-A1-102011 103 614
- FR-A1- 2 832 676
- FR-A3- 2 907 065
- US-A- 5 179 447
- US-A1- 2004 056 160
- US-A1- 2005 012 375
- US-A1- 2006 220 425
- US-A1- 2012 049 585
- US-A1- 2012 133 180

## Description

### TECHNICAL FIELD

The present invention relates to a deployable table apparatus for a vehicle; and to a vehicle incorporating a deployable table apparatus.

### BACKGROUND OF THE INVENTION

It is known to provide deployable tables which can, for example, be stowed in an armrest of an aircraft seat. These types of tables are typically manually deployed by first pivoting the table about a front pivot to raise it out of the armrest. The table is then pivot laterally to extend across the front of the seat. Known deployable tables require that the table and the associated apparatus are lifted manually by the user, for example to lift the table out of the armrest. Since the apparatus is typically stowed in the armrest immediately adjacent to the user, accessing and manually lifting the table can prove difficult. This limitation may render known designs unsuitable for heavier assemblies, for example those intended to provide a fixed table when deployed. This may present a particular problem in certain applications, such as luxury motor vehicles.

WO-A-2008/046040 discloses a table assembly mounted on a wheelchair. US-A-2012/0133180 discloses a stowable tray table assembly. US-A-2006/0220425 discloses a stowable table assembly.

At least in certain embodiments, the present invention sets out to overcome or ameliorate at least some of the problems associated with known deployable tables.

### SUMMARY OF THE INVENTION

The deployable table apparatus according to the invention comprises
a support arm;
a carrier member mounted to the support arm and movable between a retracted position and an extended position along a first longitudinal axis; and
a table mounted to the carrier member and pivotable between a first position suitable for stowage and a second position suitable for use;
wherein a biasing means is provided for biasing the carrier member towards said extended position, and
wherein the carrier member is movable from said extended position to said retracted position only when the table is in said first position.

Since the table is mounted to the carrier member, the force required to displace the carrier member to its extended position may be relatively high. Moreover, the user's movement may be inhibited if they are seated when they attempt to deploy the carrier member. The biasing means can assist the user in displacing the carrier member to its extended position, thereby facilitating deployment of the table. In certain embodiments, the biasing means could deliver sufficient force to lift the carrier member to said extended position without input from the user. However, it is envisaged that the biasing means would typically operate to assist the user in displacing the carrier member from its retracted position to its extended position.

The biasing means can comprise a spring element. The spring element can, for example, be disposed in said support arm. The biasing means can comprise a constant force spring. The constant force spring can deliver a uniform force irrespective of the position of the carrier member in relation to the support arm. This facilitates control of the carrier member as it is displaced to said extended position. Alternatively, the biasing means can comprise a spring motor. The spring motor can output an assistive force to facilitate lifting the carrier member. The spring motor can drive a toothed belt which is coupled to the carrier member. The spring motor can, for example, drivingly rotate a toothed pinion gear which cooperates with the toothed belt to deliver the assistive force to the carrier member.

The movement of the carrier member from said extended position to said retracted position can be inhibited when the table is in said second position.

The movement of the table from said first position to said second position can be inhibited when the carrier member is in said retracted position. The table can be pivotable to said second position only when the carrier member is in said extended position.

The carrier member can be movably mounted to a first side of the support arm in a side-by-side arrangement. The table can be positioned across or over an end of the support arm when it is in said second position. Thus, the table can extend outwardly from a second side of the support arm (opposite to the first side thereof) when it is in said second position. The side-by-side arrangement of the carrier member and the support arm can retain the table in said first position until the carrier member is in said extended position.

The movement of the carrier member from said extended position to said retracted position can be inhibited when the table is in said second position.

The first longitudinal axis can be arranged substantially parallel to a longitudinal axis of the support arm. The table can have a second longitudinal axis. The first and second longitudinal axes can be arranged substantially coincident with (or parallel to) each other when the table is in said first position. The first and second longitudinal axes can arranged substantially perpendicular to each other when the table is in said second position.

The table travels with the carrier member when displaced from said extended position to said retracted position. The table can be arranged substantially vertically in said first position and substantially horizontally in said second position.

As outlined above, the carrier member can be mounted to the first side of the support arm in a side-by-side arrangement. The table can be pivotable to said second position only when the carrier member is in said extended position. The side-by-side arrangement of the carrier member and the support arm can retain the table in said first position until the carrier member is in said extended position. Thus, movement of the table from said first position to said second position can be inhibited when the carrier member is in said retracted position.

According to a further aspect of the present invention there is provided a deployable table apparatus for a vehicle, the deployable table apparatus comprising:
a support arm;
a carrier member mounted to the support arm and movable between a retracted position and an extended position along a first longitudinal axis;
a table mounted to the carrier member and pivotable between a first position suitable for stowage and a second position suitable for use; and
a biasing means (23) for biasing the carrier member towards said extended position,
wherein the table is pivotable to said second position only when the carrier member is in said extended position.

The carrier member can comprise a coupling for mounting the table. The coupling can be displaced beyond a distal (free) end of the support arm when the carrier member moves from said retracted position to said extended position. Only once the coupling is positioned beyond the distal end of the support arm can the table be pivoted to said second position.

The table can pivot over the distal end of the support arm. A portion of an underside of the table can abut the support arm when the table is in said second position. The carrier member can be mounted to the first side of the support arm and the table can pivots towards the second side of the support arm (opposite to the first side) when displaced from said first position to said second position.

A biasing means can be provided for biasing the carrier member towards said extended position. A damping mechanism can be provided for controlling movement of the table from said first position to said second position; and/or from said second position to said first position.

The support arm can be rotatable between a deployed position and a stowed position. A deployment means can be provided for rotating the support arm from said stowed position to said deployed position. The deployment means can comprise an electric drive machine. A control unit can be provided for controlling operation of the electric machine. The control unit can be configured to rotate the support arm from said deployed position to said stowed position only when the carrier member is in said retracted position. The control unit can be operated in response to a signal received from a control panel.

The table can comprise a first portion and a second portion. The second portion of the table can be movable laterally relative to the first portion. For example, the second portion can translate along at least one guide member. A damping means can be provided for controlling the movement of the second portion relative to the first portion. The damping means can comprise a viscous damper.

According to a still further aspect of the present invention there is provided a vehicle comprising a deployable table apparatus as described herein. The deployable table apparatus can be installed in a centre console in the vehicle.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

### BRIEF DESCRIPTION OF THE DRAWINGS

An embodiment of the present invention will now be described, by way of example only, with reference to the accompanying Figures, in which:
Figure 1 shows a centre console for a back seat of a vehicle incorporating a deployable table in accordance with an embodiment of the present invention;
Figure 2 shows a view of the interior of the vehicle cabin with the table shown in Figure 1 in a deployed position;
Figures 3A and 3B show perspective views of the deployable table shown in Figure 1 in first and second configurations;
Figure 4 shows a perspective view of the operating mechanism for the deployable table shown in Figure 1 in a retracted position;
Figure 5 shows a partial assembly view of the support arm for the deployable table shown in Figure 1;
Figure 6 shows a perspective view of the table carrier member mounted to the support arm shown in Figure 4;
Figures 7A and 7B show a partial assembly views of the support arm in a retracted position and in a deployed position; and
Figures 8A and 8B show the table in an intermediate position and in a final deployed position.

### DETAILED DESCRIPTION OF AN EMBODIMENT

A deployable table apparatus 1 for deploying a table 3 in accordance with an embodiment of the present invention will now be described with reference to the accompanying Figures.

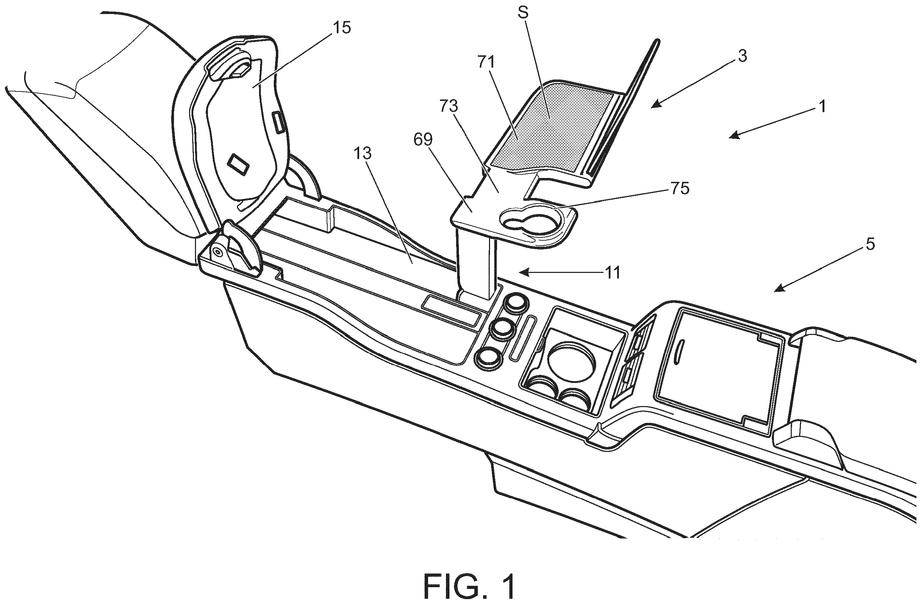

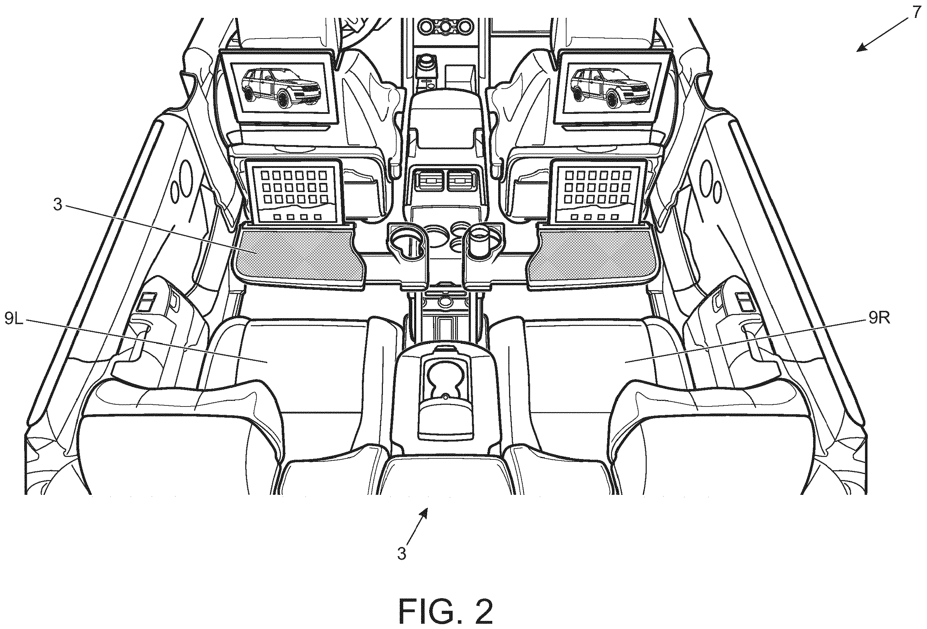

In the present embodiment the apparatus 1 is provided in a centre console 5 of a vehicle 7, as shown in Figures 1 and 2. The centre console 5 is positioned in the vehicle cabin between left and right rear seats 9L, 9R. The apparatus 1 is arranged to displace the table 3 between a stowed position in the centre console 5 and a deployed position for use.

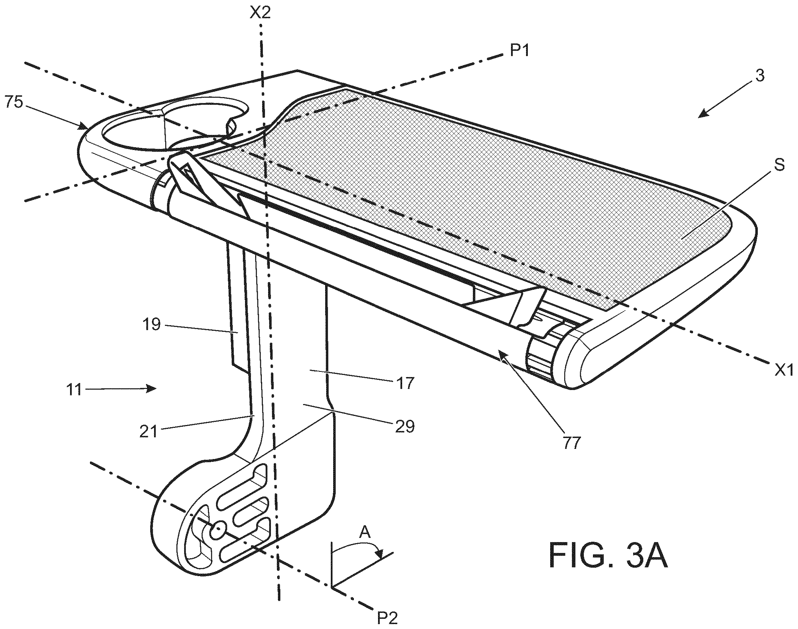

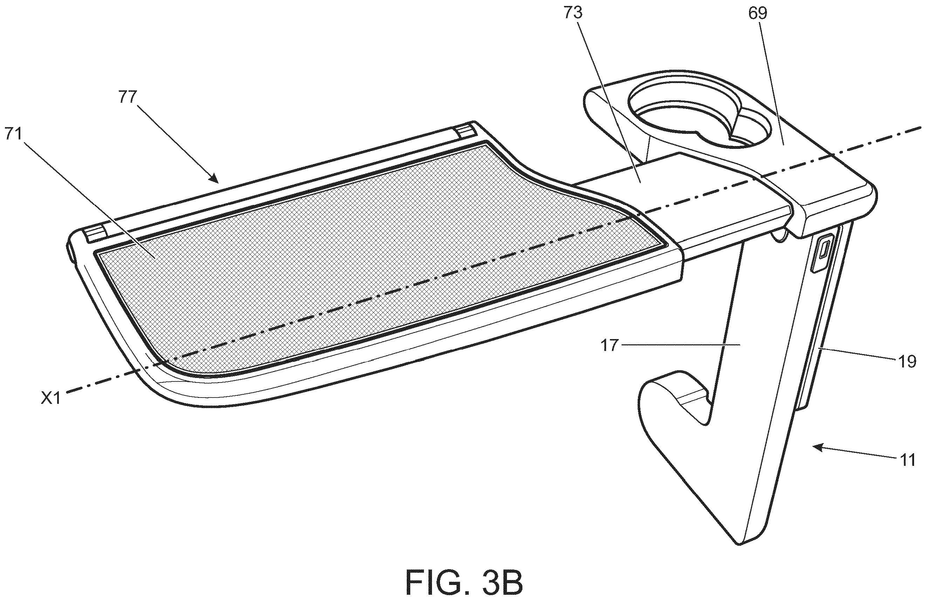

As shown in Figures 3A and 3B, the table 3 is mounted to an extendable arm 11. The extendable arm 11 is rotatably mounted to the centre console 3. In its stowed position, the table 3 is received in a chamber 13 formed in the centre console 5. In the deployed position (shown in Figures 1 and 2), the table 3 extends transversely across an adjacent seat 9L for use by an occupant of the vehicle 7. As shown in Figure 2, a table 3 can be provided on each side of the vehicle 7. The left and right tables have the same configuration and can be operated independently of each other. For the sake of brevity, only the left-hand table 3 will be described herein.

A central armrest 15 is pivotally mounted to the centre console 5 and can be folded down to its operative position when the table 3 is in either its stowed position or its deployed positions. The chamber 13 is covered by front and rear panels (not shown) which can be opened by an electric drive motor operating a rack and pinion drive (not shown). The front and rear panels follow an arcuate guide track as they open and close. The front panel is a slave to the rear panel and remains open when the extendable arm 11 is deployed.

The extendable arm 11 comprises a support arm 17 and a carrier member 19. The carrier member 19 is slidably mounted to the support arm 17 and can undergo translation along a longitudinal axis X2 of the support arm 17 to extend or retract the extendable arm 11. The carrier member 19 is mounted on a first side 21 of the support arm 15 which is disposed towards a centre line of the vehicle 7.

The table 3 has a working surface S which is substantially planar. In the present embodiment, the table 3 is machined from aluminium. As described herein, a biasing mechanism 23 is provided in the support arm 19 to deliver a mechanical force to assist the user when lifting the table 3 and the carrier member 19 relative to the support arm 17. A stop (not shown) is provided on the support arm 17 to limit the displacement of the carrier member 19 relative to the support arm 17.

A pivoting coupling 27 is provided at an upper end of the carrier member 19 for pivotally mounting the table 3. The pivoting coupling 27 defines a first pivot axis P1 about which the table 3 can pivot between a first position for stowage and a second position ready for use. The longitudinal axis X1 of the table 3 is substantially perpendicular to the first pivot axis. In relation to the support arm 17, the longitudinal axis X1 of the table 3 is disposed substantially parallel to the longitudinal axis X2 in said first position, and substantially perpendicular to the longitudinal axis X2 in said second position. The pivoting coupling 27 accommodates a pivoting movement of approximately 90° about said first pivot axis P1. A damping mechanism can optionally be provided to control the speed at which the table 3 pivots from said first position to said position. The damping mechanism can, for example, comprise a spring, a piston or a gas strut. The damping mechanism can be incorporated into the pivoting coupling 27.

The pivoting coupling 27 is arranged such that the table 3 pivots over the support arm 17 when it is pivoted from said first position to said second position. Consequently, the table 3 extends outwardly from a second side 29 of the support arm 15 (opposite to the first side 21) when it is in its second position. A support platform 31 formed on an underside of the table 3 for engaging an upper contact surface 33 of the support arm 17 when the table 3 is in this second position. The support arm 17 thereby provides additional support for the table 3 when it is deployed and may help avoid over-articulation of the pivoting coupling 27. It will be appreciated that the support arm 17 also functions to inhibit pivoting of the table 3 until the carrier member 19 is in its uppermost position. Thus, the table 3 can pivot to an operative position only when the carrier member 19 is in its extended position. A latching mechanism (not shown) is optionally provided in the support arm 19 to lock the table 3 in its second position.

The extendable arm 11 is made of aluminium and comprises a foot portion 35. As described in more detail below, the foot portion 35 is pivotally mounted to a support assembly 37 located in the centre console 5. The foot portion 35 defines a second pivot axis P2 which extends transversely across the vehicle 7. An arrow A shown in Figure 3 illustrates the pivoting movement of the support arm 11 through approximately 90° about said second pivoting axis P2. The support arm 11 is pivoted backwards (i.e. towards the rear of the vehicle 7) when the table 3 is stowed.

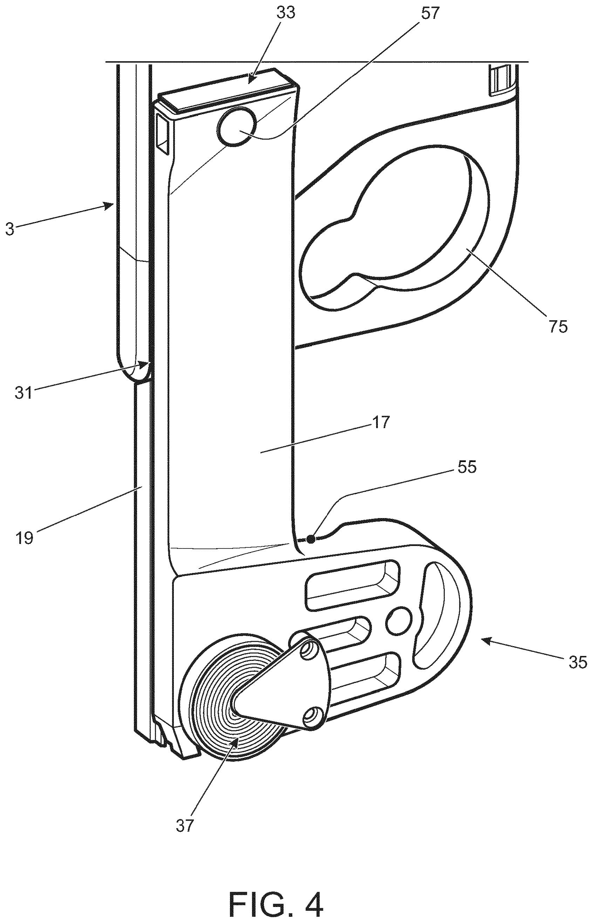

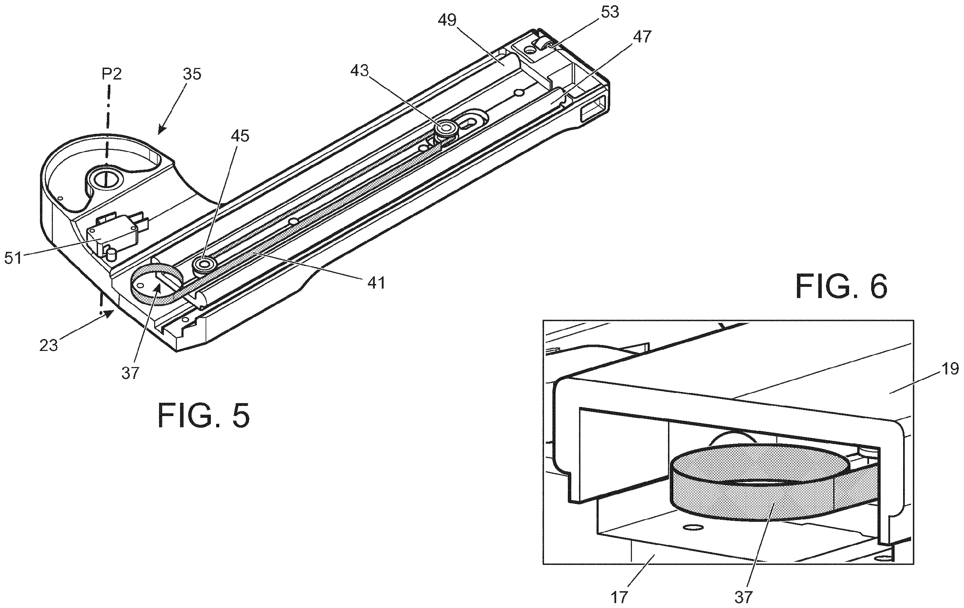

The biasing mechanism 23 provides a force to assist with lifting the carrier member 19 as the table 3 is deployed. With reference to Figures 4, 5 and 6, the biasing mechanism 23 comprises a spring motor (denoted generally by the reference numeral 37) drivingly connected to a lower toothed belt pinion 45 by a through shaft. The lower toothed belt pinion 45 drivingly engages a toothed belt 41 to provide the assisting force. The toothed belt 41 extends vertically and is supported at its upper end by an upper belt pinion 43. The toothed belt 41 is clamped to the carrier member 19. As the carrier member 19 is lifted, the spring motor 37 drivingly rotates the lower toothed belt pinion 45 which drives the toothed belt 41 and applies a force to the toothed belt 41 which acts to lift the carrier member 19 and the table 3. The spring motor 37 is preloaded (wound) by the action of pushing the carrier member 19 back into its stowed position at the bottom of the support arm 17. The toothed belt 41 can be wound onto a spindle (not shown) provided at the bottom of the support arm 11. The spring motor 37 in the present embodiment can deliver an assistive force of approximately 7N to assist with lifting the carrier member 19 and the table 3. With reference to Figure 5, the support arm 17 is slidably mounted on first and second guide rails 47, 49 provided in the support arm 17. A damping mechanism could optionally be provided for controlling the lifting and/or lowering of the carrier member 19.

A first electrical switch 51 is provided in the foot portion 35 to output a first signal when the support arm 11 has rotated to its upright position. A second electrical switch 53 is provided at the top of the support arm 11 to output a second signal when the carrier member 19 reaches the uppermost position in its travel. The first and second signals are output from the respective first and second switches 51, 53 to an electronic control unit (not shown). An assist mechanism release button 55 can optionally be provided in the support arm 17 to release the assist mechanism 23. A table release button 57 is provided at the top of the support arm 17 to release the latching mechanism which locks the table 3 its second position.

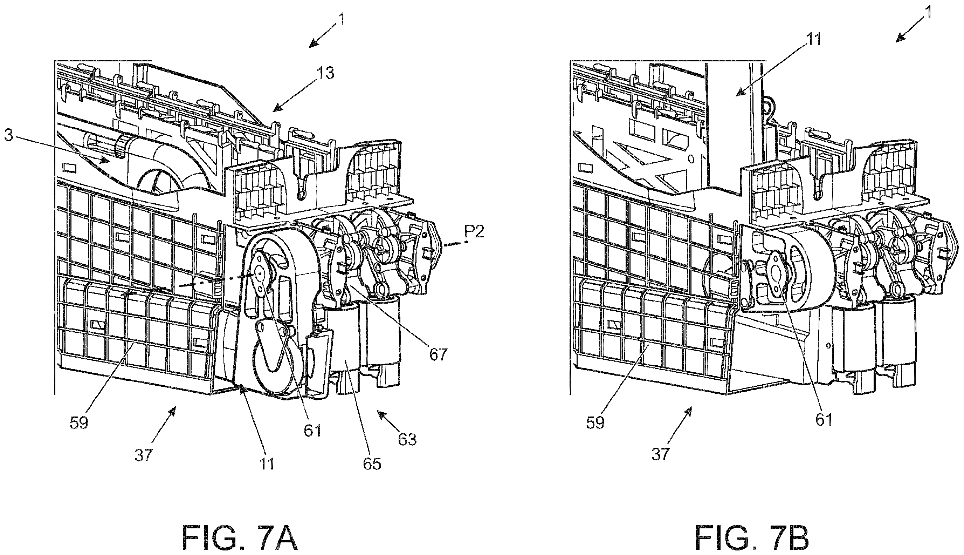

The foot portion 35 of the support arm 11 is pivotally mounted to the support assembly 37. As shown in Figures 7A and 7B, the support assembly 37 comprises a housing 59 which supports a pivot pin 61 which defines the second pivot axis P2. A deployment mechanism 63 is provided to rotate the support arm 17 about the pivot pin 61. The deployment mechanism 63 comprises an electric motor 65 coupled to the support arm 17 via a gearbox 67. The table 3 is shown in a stowed position in Figure 7A and in a deployed position in Figure 7B. The electric motor 65 is controlled by the electronic control unit connected to the first and second electrical switches 51, 53. It will be appreciated from Figures 7A and 7B that separate deployment actuator 63 are provided for each table 3 and can be operated independently of each other.

In the present embodiment the table 3 is divided into first and second sections 69, 71. The first section 69 is coupled to the pivoting coupling 27 mounted to said carrier member 19. The second section 71 is slidably mounted on a cantilever member 73, supported by the first section 69, extending parallel to the longitudinal X1 of the table 3. The second section 71 can be manually displaced along said cantilever member 73 for positioning directly in front of the seat occupant, as shown most clearly in Figure 3B. The cantilever member 73 can be replaced with one or more bearing rods. A damping mechanism (not shown) is provided in the second section 71 to control the deployment speed. The damping mechanism can, for example, comprise a rotary viscous damper cooperating with a toothed rack coupled to the second section 71. The cantilever member 73 comprises first and second detents for cooperating with a spring biased member (such as a ball bearing) to delimit the travel of the second section 71 in each direction.

A cup-holder 75 is formed in the first section 69 of the table 3. Furthermore, the second section 71 comprises a support device 77 for supporting a tablet computer (not shown). The support device 77 is the subject of a separate application entitled "SUPPORTING DEVICE" filed on the same date as the present application by the Applicant. The contents of this application are incorporated herein in their entirety by reference. The table 3 also comprises a universal serial bus (USB) port (not shown) for connecting the tablet computer to on-board systems.

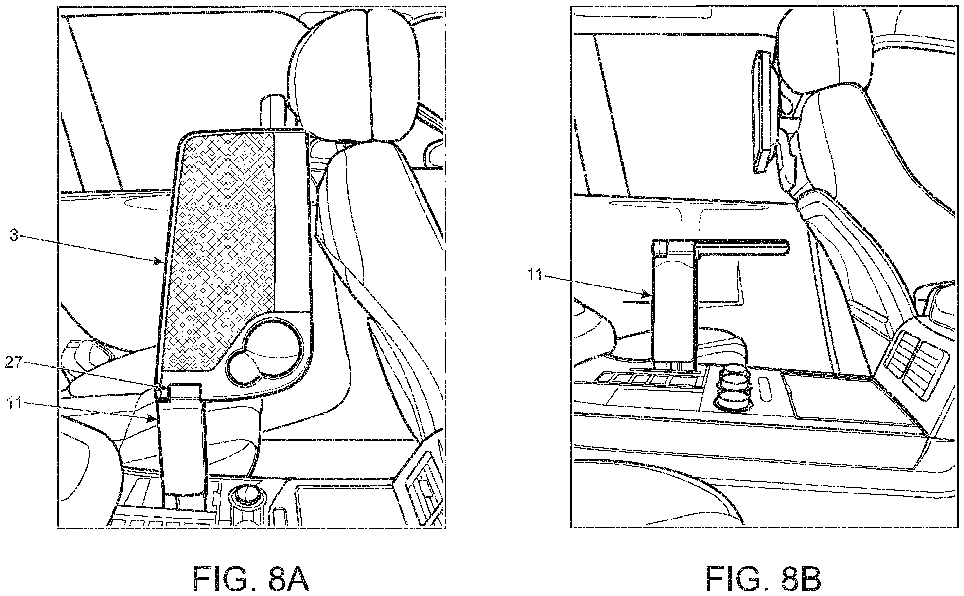

The deployment of the table 3 will now be described with reference to Figures 8A and 8B. The table 3 is initially stowed in the chamber 13 within the centre console 5 of the vehicle 7. In its stowed configuration, the longitudinal axis X1 of the table 3 is arranged substantially parallel to the longitudinal axis X2 of the support arm 17 such that the working surface S is arranged in an upright position. To initiate the deployment of the table 3, the user lifts the centre armrest 15 and presses a deployment button (not shown). The front and rear closure panels are displaced to open the chamber 13. The deployment mechanism 63 is then activated to rotate the support arm 17 from its horizontal stowed position (shown in Figure 7A) to its vertical deployed position (shown in Figure 7B). The rotation of the support arm 17 displaces the table 3 to an upright position within the vehicle cabin 5, as shown in Figure 8A. The carrier member 19 is retracted when the support arm 17 is initially deployed.

The user then depresses the release button 55 and lifts the table 3 and the carrier member 19 vertically relative to the support arm 17. The spring motor 37 of the biasing mechanism 23 deliver an assistive force to help the user complete this process. The presence of the support arm 17 inhibits rotation of the table 3 about the first pivot axis P1. Only once the carrier member 19 has reached the top of its travel can the table 3 pivot about the first pivot axis P1 from its first position to its second position, as shown in Figure 8B. The working surface S is arranged in a substantially horizontal position when the table 3 is in said second position. The support platform 31 on the underside of the table 3 engages the contact surface 33 of the support arm 17 when the table 3 is in this second position. The pivoting action of the table 3 is performed under its own weight. The second section 71 of the table 3 can then optionally be displaced in a lateral direction by sliding it along the cantilever member 73.

In order to stow the table 3, the table 3 is rotated from its second position to its first position. The table 3 and the carrier member 19 are then displaced downwardly, thereby recharging the spring motor 37. The table 3 is then locked in position by the latching mechanism to prevent redeployment. The user then lifts the armrest 15 and depresses a table stow button. The electric motor 65 operates to rotate the extendable arm 11 back to its stowed position while the table stow button is depressed. If the table stow position is released, the electric motor 65 is deactivated to inhibit further movement of the extendable arm 11. Thus, releasing the table stow button halts movement of the extendable arm 11, thereby helping to prevent objects being trapped by the extendable arm 11. Equally, operation of the electric motor 65 is inhibited if the table 2 is not folded properly into said second position, as determined by the second switch 53. Once the extendable arm 11 is in its stowed position, the front and rear closure panels are returned to their closed position automatically. The user then lowers the centre armrest 15.

It will be appreciated that various changes and modifications can be made to the apparatus described herein. For example, alternate drive mechanisms could be provided to raise the carrier member 19 and the table 3. Alternate drive mechanisms include a spring motor assist mechanism; or a gas strut assist mechanism. Indeed, rather than assisting the user, the drive mechanism could be configured to lift the carrier member 19 and the table 3. A spring motor lift mechanism or a cash strapped lift mechanism could be provided to perform this function. It will be appreciated that an electric drive motor could also be provided to assist or lift the carrier member 19 and the table 3.

A further modification would be to replace the support arm 17 and carrier member 19 with a telescopic arm.

## Claims

1. A deployable table apparatus (1) for a vehicle (7), the deployable table apparatus comprising:
a support arm (17);
a carrier member (19) mounted to the support arm (17) and movable between a retracted position and an extended position along a first longitudinal axis (X2); and
a table (3) mounted to the carrier member (19) and pivotable between a first position suitable for stowage and a second position suitable for use, wherein the carrier member (19) is movable from said extended position to said retracted position only when the table (3) is in said first position; and
a biasing means (23) for biasing the carrier member towards said extended position.

2. A deployable table apparatus (1) as claimed in claim 1, wherein the table (3) has a second longitudinal axis (X1), the first and second longitudinal axes being arranged substantially coincident with each other when the table is in said first position.

3. A deployable table apparatus (1) as claimed in claim 2 wherein the first and second longitudinal axes are arranged substantially perpendicular to each other when the table (3) is in said second position.

4. A deployable table apparatus (1) as claimed in any one of the preceding claims, wherein the table (3) is arranged substantially vertically in said first position and substantially horizontally in said second position.

5. A deployable table apparatus (1) as claimed in claim 4, wherein the table (3) is pivotable to said second position only when the carrier member (19) is in said extended position.

6. A deployable table apparatus (1) as claimed in claim 5, wherein the carrier member (19) comprises a coupling (27) for mounting the table (3), the coupling being displaced beyond a distal end of the support arm (17) when the carrier member moves from said retracted position to said extended position.

7. A deployable table apparatus (1) as claimed in any one of the preceding claims, wherein the biasing means (23) comprises a spring element disposed in said support arm (17) and/or the biasing means comprises a spring motor (37) coupled to said carrier member (19).

8. A deployable table apparatus (1) as claimed in any one of the preceding claims, wherein a portion of an underside of the table (3) abuts the support arm (17) when the table is in said second position, and/or
wherein the support arm (17) is rotatable between a deployed position and a stowed position, optionally,
wherein deployment means (63) is provided for rotating the support arm (17) from said stowed position to said deployed position, optionally still,
wherein the deployment means (63) comprises an electric machine coupled to a control unit, the control unit being configured to operate the electric machine to rotate the support arm (17) from said deployed position to said stowed position only when the carrier member is in said retracted position.

9. A deployable table apparatus (1) as claimed in any one of the preceding claims, wherein the table (3) comprises a first portion and a second portion, the second portion being movable laterally relative to the first portion, optionally,
the apparatus comprising a damping means for controlling the movement of the second portion relative to the first portion.

10. A deployable table apparatus (1) for a vehicle, the deployable table apparatus comprising:
a support arm (17);
a carrier member (19) mounted to the support arm and movable between a retracted position and an extended position along a first longitudinal axis (X2);
a table (3) mounted to the carrier member and pivotable between a first position suitable for stowage and a second position suitable for use; and
a biasing means (23) for biasing the carrier member towards said extended position,
wherein the table is pivotable to said second position only when the carrier member is in said extended position.

11. A deployable table apparatus (1) as claimed in claim 11, wherein the carrier member (19) comprises a coupling (27) for mounting the table (3), the coupling being displaced beyond a distal end of the support arm when the carrier member moves from said retracted position to said extended position

12. A deployable table apparatus (1) as claimed in claim 11 or 12, wherein a portion of an underside of the table (3) abuts the support arm when the table is in said second position, and/or
the apparatus comprising a biasing means (23) for biasing the carrier member (19) towards said extended position, optionally, wherein the support arm (17) is rotatable between a deployed position and a stowed position.

13. A deployable table apparatus (1) as claimed in claim 12, wherein deployment means (63) is provided for rotating the support arm (17) from said stowed position to said deployed position, optionally,
wherein the deployment means (63) comprises an electric machine coupled to a control unit, the control unit being configured to operate the electric machine to rotate the support arm from said deployed position to said stowed position only when the carrier member (19) is in said retracted position.

14. A deployable table apparatus (1) as claimed in any one of claims 11 to 13, wherein the table (3) comprises a first portion and a second portion, the second portion being movable laterally relative to the first portion, optionally,
the apparatus comprising a damping means for controlling the movement of the second portion relative to the first portion.

15. A vehicle (7) comprising a deployable table apparatus (1) as claimed in any one of the preceding claims, optionally,
wherein the deployable table apparatus is installed in a centre console in the vehicle.

## Patentansprüche

1. Ausfahrbare Tischvorrichtung (1) für ein Fahrzeug (7), wobei die ausfahrbare Tischvorrichtung Folgendes umfasst:
einen Stützarm (17);
ein Trägerteil (19), das an dem Stützarm (17) angebracht und zwischen einer eingezogenen Position und einer ausgezogenen Position entlang einer ersten Längsachse (X2) beweglich ist; und
einen Tisch (3), der an dem Trägerteil (19) angebracht und zwischen einer ersten Position, die zum Verstauen geeignet ist, und einer zweiten Position, die zum Gebrauch geeignet ist, schwenkbar ist, wobei das Trägerteil (19) nur dann von der ausgezogenen Position in die eingezogene Position bewegbar ist, wenn sich der Tisch (3) in der ersten Position befindet; und
eine Vorspanneinrichtung (23) zum Vorspannen des Trägerteils in Richtung der ausgezogenen Position.

2. Ausfahrbare Tischvorrichtung (1) nach Anspruch 1, wobei der Tisch (3) eine zweite Längsachse (X1) aufweist, wobei die erste und die zweite Längsachse im Wesentlichen miteinander zusammenfallen, wenn sich der Tisch in der ersten Position befindet.

3. Ausfahrbare Tischvorrichtung (1) nach Anspruch 2, wobei die erste und zweite Längsachse im Wesentlichen senkrecht zueinander angeordnet sind, wenn sich der Tisch (3) in der zweiten Position befindet.

4. Ausfahrbare Tischvorrichtung (1) nach einem der vorhergehenden Ansprüche, wobei der Tisch (3) im Wesentlichen vertikal in der ersten Position und im Wesentlichen horizontal in der zweiten Position angeordnet ist.

5. Ausfahrbare Tischvorrichtung (1) nach Anspruch 4, wobei der Tisch (3) nur dann in die zweite Position schwenkbar ist, wenn sich das Trägerteil (19) in der ausgezogenen Position befindet.

6. Ausfahrbare Tischvorrichtung (1) nach Anspruch 5, wobei das Trägerteil (19) eine Kupplung (27) zum Anbringen des Tisches (3) umfasst, wobei die Kupplung über ein distales Ende des Stützarms (17) hinaus verschoben wird, wenn sich das Trägerteil von der eingezogenen Position in die ausgezogene Position bewegt.

7. Ausfahrbare Tischvorrichtung (1) nach einem der vorhergehenden Ansprüche, wobei die Vorspanneinrichtung (23) ein in dem Tragarm (17) angeordnetes Federelement umfasst und/oder wobei die Vorspanneinrichtung einen mit dem Trägerteil (19) gekoppelten Federmotor (37) umfasst.

8. Ausfahrbare Tischvorrichtung (1) nach einem der vorhergehenden Ansprüche, wobei ein Abschnitt einer Unterseite des Tisches (3) an den Stützarm (17) anstößt, wenn sich der Tisch in der zweiten Position befindet, und/oder wobei der Stützarm (17) zwischen einer ausgefahrenen Position und einer verstauten Position drehbar ist, wobei optional eine Ausfahreinrichtung (63) vorgesehen ist, um den Stützarm (17) aus der verstauten Position in die ausgefahrene Position zu drehen, wobei optional die Ausfahreinrichtung (63) eine elektrische Maschine umfasst, die mit einer Steuereinheit gekoppelt ist, wobei die Steuereinheit so konfiguriert ist, dass sie die elektrische Maschine so betreibt, dass sie den Stützarm (17) nur dann aus der ausgefahrenen Position in die verstaute Position dreht, wenn sich das Trägerteil in der eingezogenen Position befindet.

9. Ausfahrbare Tischvorrichtung (1) nach einem der vorhergehenden Ansprüche, wobei der Tisch (3) einen ersten Abschnitt und einen zweiten Abschnitt umfasst, wobei der zweite Abschnitt seitlich relativ zu dem ersten Abschnitt beweglich ist, wobei optional die Vorrichtung eine Dämpfungseinrichtung zum Steuern der Bewegung des zweiten Abschnitts relativ zu dem ersten Abschnitt umfasst.

10. Ausfahrbare Tischvorrichtung (1) für ein Fahrzeug, wobei die ausfahrbare Tischvorrichtung Folgendes umfasst:
einen Stützarm (17);
ein Trägerteil (19), das an dem Stützarm angebracht und zwischen einer eingezogenen Position und einer ausgezogenen Position entlang einer ersten Längsachse (X2) beweglich ist;
einen Tisch (3), der an dem Trägerteil angebracht und zwischen einer ersten Position, die zum Verstauen geeignet ist, und einer zweiten Position, die zum Gebrauch geeignet ist, schwenkbar ist; und
eine Vorspanneinrichtung (23) zum Vorspannen des Trägerteils in Richtung der ausgezogenen Position, wobei der Tisch nur dann in die zweite Position schwenkbar ist, wenn sich das Trägerteil in der ausgezogenen Position befindet.

11. Ausfahrbare Tischvorrichtung (1) nach Anspruch 11, wobei das Trägerteil (19) eine Kupplung (27) zum Anbringen des Tisches (3) umfasst, wobei die Kupplung über ein distales Ende des Stützarms hinaus verschoben wird, wenn sich das Trägerteil von der eingezogenen Position in die ausgezogene Position bewegt.

12. Ausfahrbare Tischvorrichtung (1) nach Anspruch 11 oder 12, wobei ein Abschnitt einer Unterseite des Tisches (3) an den Stützarm anstößt, wenn sich der Tisch in der zweiten Position befindet, und/oder wobei die Vorrichtung eine Vorspanneinrichtung (23) zum Vorspannen des Trägerteils (19) in Richtung der ausgezogenen Position umfasst, wobei optional der Stützarm (17) zwischen einer ausgefahrenen Position und einer verstauten Position drehbar ist.

13. Ausfahrbare Tischvorrichtung (1) nach Anspruch 12, wobei optional eine Ausfahreinrichtung (63) vorgesehen ist, um den Stützarm (17) aus der verstauten Position in die ausgefahrene Position zu drehen, wobei die Ausfahreinrichtung (63) eine elektrische Maschine umfasst, die mit einer Steuereinheit gekoppelt ist, wobei die Steuereinheit konfiguriert ist, um die elektrische Maschine so zu betreiben, dass der Stützarm nur dann aus der ausgefahrenen Position in die verstaute Position gedreht wird, wenn sich das Trägerteil (19) in der eingezogenen Position befindet.

14. Ausfahrbare Tischvorrichtung (1) nach einem der Ansprüche 11 bis 13, wobei der Tisch (3) einen ersten Abschnitt und einen zweiten Abschnitt umfasst, wobei der zweite Abschnitt relativ zum ersten Abschnitt seitlich beweglich ist, wobei optional die Vorrichtung eine Dämpfungseinrichtung zum Steuern der Bewegung des zweiten Abschnitts relativ zum ersten Abschnitt umfasst.

15. Fahrzeug (7), umfassend eine ausfahrbare Tischvorrichtung (1) nach einem der vorhergehenden Ansprüche, wobei optional die ausfahrbare Tischvorrichtung in einer Mittelkonsole im Fahrzeug installiert ist.

## Revendications

1. Appareil de table déployable (1) destiné à un véhicule (7), l'appareil de table déployable comprenant :
un bras de support (17) ;
un élément porteur (19) monté sur le bras de support (17) et mobile entre une position rétractée et une position étendue le long d'un premier axe longitudinal (X2) ; et
une table (3) montée sur l'élément porteur (19) et pouvant pivoter entre une première position appropriée pour le rangement et une seconde position appropriée pour l'utilisation, lequel l'élément porteur (19) étant mobile de ladite position étendue à ladite position rétractée uniquement lorsque la table (3) est dans ladite première position ; et
un moyen de sollicitation (23) destiné à solliciter l'élément porteur vers ladite position étendue.

2. Appareil de table déployable (1) selon la revendication 1, dans lequel la table (3) présente un second axe longitudinal (X1), les premier et second axes longitudinaux étant agencés sensiblement en correspondance l'un avec l'autre lorsque la table est dans ladite première position.

3. Appareil de table déployable (1) selon la revendication 2, dans lequel les premier et second axes longitudinaux sont agencés sensiblement perpendiculairement l'un à l'autre lorsque la table (3) est dans ladite seconde position.

4. Appareil de table déployable (1) selon l'une quelconque des revendications précédentes, dans lequel la table (3) est agencée sensiblement verticalement dans ladite première position et sensiblement horizontalement dans ladite seconde position.

5. Appareil de table déployable (1) selon la revendication 4, dans lequel la table (3) peut pivoter vers ladite seconde position uniquement lorsque l'élément porteur (19) est dans ladite position étendue.

6. Appareil de table déployable (1) selon la revendication 5, dans lequel l'élément porteur (19) comprend un accouplement (27) destiné à monter la table (3), l'accouplement étant déplacé au-delà d'une extrémité distale du bras de support (17) lorsque l'élément porteur se déplace de ladite position rétractée à ladite position étendue.

7. Appareil de table déployable (1) selon l'une quelconque des revendications précédentes, dans lequel le moyen de sollicitation (23) comprend un élément à ressort disposé dans ledit bras de support (17) et/ou le moyen de sollicitation comprend un moteur à ressort (37) accouplé audit élément porteur (19).

8. Appareil de table déployable (1) selon l'une quelconque des revendications précédentes, dans lequel une partie d'une face inférieure de la table (3) vient en butée contre le bras de support (17) lorsque la table est dans ladite seconde position, et/ou dans lequel le bras de support (17) peut tourner entre une position déployée et une position rangée, éventuellement, un moyen de déploiement (63) étant prévu pour faire tourner le bras de support (17) de ladite position rangée à ladite position déployée, éventuellement encore, le moyen de déploiement (63) comprenant une machine électrique accouplée à une unité de commande, l'unité de commande étant configurée pour faire fonctionner la machine électrique pour faire tourner le bras de support (17) de ladite position déployée à ladite position rangée uniquement lorsque l'élément porteur est dans ladite position rétractée.

9. Appareil de table déployable (1) selon l'une quelconque des revendications précédentes, dans lequel la table (3) comprend une première partie et une seconde partie, la seconde partie étant mobile latéralement par rapport à la première partie, éventuellement, l'appareil comprenant un moyen d'amortissement destiné à commander le déplacement de la seconde partie par rapport à la première partie.

10. Appareil de table déployable (1) destiné à un véhicule, l'appareil de table déployable comprenant :
un bras de support (17) ;
un élément porteur (19) monté sur le bras de support et mobile entre une position rétractée et une position étendue le long d'un premier axe longitudinal (X2) ;
une table (3) montée sur l'élément porteur et pouvant pivoter entre une première position appropriée pour le rangement et une seconde position appropriée pour l'utilisation ; et
un moyen de sollicitation (23) destiné à solliciter l'élément porteur vers ladite position étendue, dans lequel la table peut pivoter vers ladite seconde position uniquement lorsque l'élément porteur est dans ladite position étendue.

11. Appareil de table déployable (1) selon la revendication 11, dans lequel l'élément porteur (19) comprend un accouplement (27) destiné à monter la table (3), l'accouplement étant déplacé au-delà d'une extrémité distale du bras de support lorsque l'élément porteur se déplace de ladite position rétractée à ladite position étendue

12. Appareil de table déployable (1) selon la revendication 11 ou 12, dans lequel une partie d'une face inférieure de la table (3) vient en butée contre le bras de support lorsque la table est dans ladite seconde position, et/ou l'appareil comprenant un moyen de sollicitation (23) destiné à solliciter l'élément porteur (19) vers ladite position étendue, éventuellement, dans lequel le bras de support (17) peut tourner entre une position déployée et une position rangée.

13. Appareil de table déployable (1) selon la revendication 12, dans lequel un moyen de déploiement (63) est prévu pour faire tourner le bras de support (17) de ladite position rangée à ladite position déployée, éventuellement, dans lequel le moyen de déploiement (63) comprend un machine accouplée à une unité de commande, l'unité de commande étant configurée pour faire fonctionner la machine électrique pour faire tourner le bras de support de ladite position déployée à ladite position rangée uniquement lorsque l'élément porteur (19) est dans ladite position rétractée.

14. Appareil de table déployable (1) selon l'une quelconque des revendications 11 à 13, dans lequel la table (3) comprend une première partie et une seconde partie, la seconde partie étant mobile latéralement par rapport à la première partie, éventuellement, l'appareil comprenant un moyen d'amortissement destiné à commander le déplacement de la seconde partie par rapport à la première partie.

15. Véhicule (7) comprenant un appareil de table déployable (1) selon l'une quelconque des revendications précédentes, éventuellement, dans lequel l'appareil de table déployable est installé dans une console centrale dans le véhicule.
